Europäisches Patentamt

European Patent Office

Office européen des brevets

(19)

(11) Veröffentlichungsnummer: **0 187 931**
**B1**

(12) **EUROPÄISCHE PATENTSCHRIFT**

(45) Veröffentlichungstag der Patentschrift: **31.10.90**

(51) Int. Cl.⁵: **A 23 J 7/00**

(21) Anmeldenummer: **85115148.0**

(22) Anmeldetag: **29.11.85**

(54) Verfahren zur Isolierung eines Begleitphospholipid-freien Phosphatidylcholins.

(30) Priorität: **17.12.84 DE 3445949**

(43) Veröffentlichungstag der Anmeldung:
**23.07.86 Patentblatt 86/30**

(45) Bekanntmachung des Hinweises auf die
Patenterteilung:
**31.10.90 Patentblatt 90/44**

(84) Benannte Vertragsstaaten:
**AT BE CH DE FR GB IT LI LU NL SE**

(56) Entgegenhaltungen:
EP-A-0 004 848
EP-A-0 054 770

CHEMICAL ABSTRACTS, Band 89, 1978, Seite 259, Zusammenfassung Nr. 211361u, Columbus, Ohio, US; N.S. RADIN: "The preparative isolation of lecithin", J. LIPID RES. 1978, 19(7), 922-4

CHEMICAL ABSTRACTS, Band 82, 1975, Seite 526, Zusammenfassung Nr. 155382t, Columbus, Ohio, US; & JP-A-74 93 400

(73) Patentinhaber: **A. Nattermann & Cie. GmbH**
**Nattermannallee 1**
**D-5000 Köln 30 (DE)**

(72) Erfinder: **Günther, Bernd-Rainer, Dr.**
**Auf der Höhe 31**
**D-5010 Bergheim (DE)**
Erfinder: **Losch, Rainer, Dr.**
**U.-Haberland-Strasse 5**
**D-5300 Bonn 1 (DE)**

(74) Vertreter: **Redies, Bernd, Dr. rer. nat. et al**
**COHAUSZ & FLORACK Patentanwaltsbüro**
**Schumannstrasse 97 Postfach 14 01 20**
**D-4000 Düsseldorf 1 (DE)**

Courier Press, Leamington Spa, England.

**Beschreibung**

Die Erfindung betrifft ein neues Verfahren zur Isolierung von reinem 1,2-Diacyl-glycero-3-phosphocholin (Phosphatidylcholin), welches frei von Begleitphospholipiden ist, durch Chromatographie einer Lipidlösung an Kieselgel.

In der Pharmazie wird pflanzliches Phosphatidylcholin als Wirkstoff und als Hilfsstoff eingesetzt.

Für die Verwendung als Wirkstoff werden Phospholipide mit einem hohen Phosphatidylcholingehalt (oral) oder hochreines, nahezu Lysophosphatidylcholin-freies Phosphatidylcholin (intravenös) benötigt.

Für die Verwendung als Hilfsstoff, wie zum Beispiel als Emulgator zur Herstellung parenteral zu applizierender Fettemulsionen oder bei der Bildung von Liposomen bzw. Mischmicellen, muß das Phosphatidylcholin frei vom hämolytisch wirkenden Lysophosphatidylcholin sein.

Als Ausgangsmaterial zur Gewinnung von pflanzlichem Phosphatidylcholin wird das bei der Sojaöl- bzw. Speiseölherstellung anfallende Rohsphosphatid, welches auch als Roh-Lecithin bzw. Rohphosphatid oder Handels- Lecithin bezeichnet wird, eingesetzt. (Kirk-Othmer, Encycl. Chem. Technol. Vol. 14, Seite 250—269/P.H. List, Pharm, Verfahrenstechn. heute 1 (7) 1—8 (1980).)

Das Soja-Lecithin (Soja-Rohphosphatid) enthält

60—70% polare Lipide (Phospholipide/Glykolipide)
27—37% Sojaöl
1,5—2% Wasser
0,5—2% verschiedene Begleitsubstanzen

Die polaren Lipide, die auch Rein-Lecithin genannt werden, und durch Entölung des Roh-Lecithins bzw. Soja-Lecithin gewonnen werden, setzen sich wie folgt zusammen (ca.-Werte):

30% Phosphatidylcholin (PC)
2% Lysophosphatidylcholin (LPC)
22% Phosphatidylethanolamin (PE)
2% Lysophosphatidylethanolamin (LPE)
3% Phosphatidylserin (PS)
15% Phosphatidylinosit (PI)
1% Lysophosphatidylinosid (LPI)
13% Phytoglykolipide (PGL)
8% Phosphatidsäure (PA)
4% Begleitlipide

Ein Soja-Lecithin (Sojarohphosphatid) schlechter Qualität kann bis zu 5% Lysophosphatidylcholin enthalten.

Es sind eine Reihe von Verfahren zur Herstellung angereicherter Phosphatidylcholin-Fraktionen bekannt. So erhält man mittels acetonischer Entölung des Sojarohphosphatids (US—PS 3.268.335) eine Mischung polarer Lipide (Rein-Lecithin).

Bei der alkoholischen Extraktion von Sojarohphosphatid (DE—PS 1.492.952) erhält man eine ölhaltige Mischung Phosphatidylcholin-angereicherter, polarer Lipide.

In letzter Zeit wurden neue Technologien zur Gewinnung polarer Lipide beschrieben, so in der DE—OS 3.011.185, wo Sojarohphosphatid durch Extraktion mittels überkritischem $CO_2$ entölt wird oder wie in der Eur. Patentanmeldung 0049914, wo mittels Ultrafiltration aus Lösungen der Phospholipide in Hexan/ Propanol-2 (75/25) Phosphatidylcholin-angereicherte Fraktionen erhalten werden. Setzt man bei diesem Verfahren ölhaltige Phospholipidgemische wie Sojarohphosphatid ein, so ist entweder eine acetonische Entölung oder die Verwendung eines Lösungsmittelgradienten notwendig.

Die Gewinnung eines Begleitphospholipid-freien Phosphatidylcholins setzt eine chromatographische Auftrennung der Phospholipide voraus. Dabei kommt der Kombination des Adsorptionsmittels mit dem Elutionsmittel und der Elutionstemperatur eine ausschlaggebende Bedeutung bei.

So erhält man, ausgehend vom Sojarohphosphatid, in einem mehrstufigen Prozeß ein 3—4% Lysophosphatidylcholin enthaltendes reines Phosphatidylcholin durch Chromatographie an Aluminiumoxid mit Ethanol als Elutionsmittel (US—PS 3.031.478). Das Aluminiumoxid ist mit Phospholipiden wie Phosphatidylethanolamin, Phosphatidylinosit, Phosphatidsäure und Glykolipiden beladen; da es nicht regeneriert werden kann, muß es verworfen werden.

Das Kieselgel wird als Adsorptionsmittel häufig zur Auftrennung der Phospholipide eingesetzt. Die DE—OS 2.915.614 beschreibt ein Verfahren zur Abtrennung von Öl und Sterinen aus Sojarohphosphatiden mit dem Ziel der Rein-Lecithingewinnung mittels Chromatographie einer Petrolätherlösung über Kieselgel. Hierbei verbleiben Öl und Sterine auf dem Kieselgel, sie müssen mit polaren Lösungsmitteln in einem zweiten Schnitt eluiert werden. Aus alkoholischen Lösungen werden Phospholipide von Kieselgel bei Raumtemperatur zurückgehalten (H. Richter et al. Pharmazie 1977, 32, 164). Die Trennung oder selektive Desorption der Phosphatide erfolgt entweder mit Alkohol/Ammoniak (Japan Kokai 49093400) oder mit Gemischen aus Chloroform/Methanol bzw. Chloroform/Methanol/Wasser (DDR—PS 79 916). Prinzipiell ist die Gewinnung eines Lysophosphatidylcholin-freien Phosphatidylcholins durch Chromatographie an Kieselgel unter Verwendung eines Elutionsmittelgradienten aus Chloroform/Methanol bzw. Chloroform/ Methanol/Wasser möglich. Die Wiedergewinnung und die Entfernung derartiger Lösungsmittelgemische aus dem Endprodukt ist sehr aufwendig, speziell dann, wenn eine Gradientenelution vorliegt (z.T. azeotrope Gemische).

2

# EP 0 187 931 B1

Das in der DE—OS 3.047.048 beschriebene Verfahren zur Isolierung von Phosphatidylcholin aus alkoholischen Phospholipidlösungen mittels Kieselgelsäulenchromatographie bei erhöhten Temperaturen besteht aus zwei Stufen:

1. Extraktion aus Sojarohphosphatid Phosphatidylcholin-Ausbeute: ca. 60%

2. Säulenchromatographischer Reinigung Phosphatidylcholin-Ausbeute: ca. 73%

Über beide Stufen liegt eine Phosphatidylcholin-Ausbeute von ca. 44% der Theorie bezogen auf Sojarohphosphatid vor.

Dieser Wirkungsgrad ist unbefriedigend. Das Phosphatidylcholin enthält zudem Spuren Phosphatidylethanolamins und Lysophosphatidylcholins. Da das Lysophosphatidylcholin verfahrensbedingt nicht abgetrennt werden kann, eignet sich als Ausgangsmaterial nur ein Sojarohphosphatid bester Qualität mit einem Lysophosphatidylcholin-Gehalt von 0,5%.

Alle bisher beschriebenen Verfahren zur Isolierung von Begleitphosphatid-freiem Phosphatidylcholin aus Sojarohphosphatid sind mehr oder weniger mit Nachteilen behaftet wie:

Mehrstufige Verfahrensweise

Geringe Phosphatidylcholin-Ausbeute

Verwendung nur schwer regenerierbarer Lösungsmittelgemische, für die säulenchromatographische Auftrennung, z.T. mit Elutionsmittelgradienten.

Verwendung toxischer Lösungsmittel

Selektion der Ausgangsmaterialien im Bezug auf Lysophosphatidylcholin

Nicht regenerierbare Adsorptionsmittel

Anwesenheit von Begleitphospholipiden wie Phosphatidylethanolamin und Lysophosphatidylcholin im Endprodukt.

Niedriger Phosphatidylcholin-Gehalt.

Diese Nachteile wirken sich zwangsläufig auf die Herstellkosten aus bzw. führen nicht zum gewünschten begleitphospholipidfreien Phosphatidylcholin.

Der vorliegenden Erfindung liegt die Aufgabe zugrunde, ein einfaches Verfahren zur Isolierung eines Begleitphospholipid-freien, insbesondere Lysophosphatidylcholin-freien, Phosphatidylcholins aus Rohphosphatiden (Soja, Raps, Sonnenblumen) zu entwickeln.

Es wurde nun überraschenderweise festgestellt, daß man in einem einstufigen Prozeß aus einer Rohphosphatidlösung mittels Kieselgelsäulenchromatographie ein begleitphospholipid-freies Phosphatidylcholin erhält.

Das erfindungsgemäße Verfahren ist dadurch gekennzeichnet, daß man das Rohphosphatid in einem Lösungsmittelgemisch aus 1 Vol.-Teil Leichtbenzin (65—73), 1 Vol.-Teil Propanol-2 und 0,175 Vol.-Teilen Wasser löst, diese Lösung bei einer Temperatur im Bereich von 20—50°C auf eine mit Kieselgel gefüllte Säule gibt, bei dieser Temperatur mit dem gleichen Lösungsmittelgemisch eluiert und dabei im Hauptlauf ein Begleitphosphatid-freies Phosphatidylcholin erhält.

Im Vor- und Nachlauf werden die im Rohphosphatid vorkommenden Lipide abgetrennt. Überraschend war, daß aus einem derartigen Vielstoffgemisch in einem einstufigen Prozeß reines Phosphatidylcholin (Hauptlauf), welches nur noch mit Spuren Glykolipiden verunreinigt ist, isoliert werden konnte.

Die Glykolipide lassen sich auf bekannte Weise, z.B. durch Herauslösen von Phosphatidylcholin, mit Äthanol (Glykolipide sind in Äthanol unlöslich) entfernen. Man erhält so ein hochreines, Begleitstoff-, insbesondere Lysophosphatidylcholin-freies Phosphatidylcholin.

Der Phosphatidylcholin-Wirkungsgrad beträgt beispielsweise beim reinen Sojarohphosphatidylcholin 88% d.Th. bzw. beim hochreinen Phosphatidylcholin 86% d.Th. bezogen auf das eingesetzte Sojarohphosphatid und liegt damit in einer noch nicht erreichten Größenordnung.

Neben der einfachen Verfahrensweise bietet das neue Verfahren auch den Vorteil, daß auch minderwertige Rohphosphatide eingesetzt werden können. Das gilt auch für die aus minderwertigen Rohphosphatiden nach bekannten Verfahren hergestellten, mit Lysophosphatidylcholin verunreinigten, Phosphatidylcholine.

Als Kieselgel können übliche Produkte für die Chromatographie verschiedener Körnung oder auch gepreßtes Kieselgel, welches aktiviert oder desaktiviert sein kann, eingesetzt werden. Bevorzugt wird neutrales Kieselgel eingesetzt.

Das erfindungsgemäße Verfahren kann bei Normaldruck oder auch bei Überdruck und bei Temperaturen, die druckseitig gestattet sind, vorzugsweise 20—50°C, durchgeführt werden.

Ein ganz besonderer Vorteil des erfindungsgemäßen Verfahrens besteht darin, daß man das Kieselgel nach erfolgter Chromatographie immer wieder einsetzen kann. Sämtliche Verunreinigungen werden im Vorlauf bzw. Nachlauf aufgefangen. Auf den Nachlauf kann zudem verzichtet werden, da bei Neubeaufschlagung der Säule die dort befindlichen Verunreinigungen mit dem nächsten Vorlauf eluiert werden.

Ein weiterer Vorteil liegt in der Verwendung eines leicht redestillierbaren Lösungsmittelgemischs.

Der Vergleich mit bekannten Verfahren weist die kostenmäßigen Vorteile der neuen einstufigen Verfahrensweise aus. Das Sojaphosphatidylcholin wird beispielsweise mit 88%igem Wirkungsgrad aus Sojarohphosphatid gewonnen. Es werden in einer säulenchromatographischen Trennung 110 g Sojarohphosphatid über 200 g Kieselgel aufgetrennt, wobei nur 4,4 l Gesamteluat notwendig sind. Das Verfahren hat eher den Charakter einer Filtration als einer säulenchromatographischen Reinigung im üblichen Sinn.

Die nachstehenden Beispiele sollen die Erfindung erläutern, ohne sie jedoch zu beschränken.

3

EP 0 187 931 B1

## Beispiele

### Analytik

Die Phospholipide werden auf dünnschichtchromatographischem Weg analysiert. Der Ölgehalt wurde dem Dialysierbaren gleichgesetzt. Das Wasser wurde nach Karl Fischer und der Restlösungsmittelgehalt gaschromatographisch bestimmt.

### Lösungs- und Elutionsmittelgemisch

Es wurde ein Gemisch aus 1 Vol.-Teil Leichtbenzin (65—73°C), 1 Vol.-Teil Propanol-2 und 0,175 Vol.-Teilen Wasser eingesetzt.

### Säulenchromatographie

Es wurde eine Doppelmantelchromatographiesäule (Innendurchmesser 4,5 c; Höhe 37 cm) eingesetzt. Der Säule vorgeschaltet war ein Wärmeaustauscher. Die Säule wurde mit einer Anschlämmung von 200 g Kieselgel (Woelm) im angegebenen Lösungsmittelgemisch gefüllt. Nach erfolgter Chromatographie kann das Kieselgel wieder benutzt werden.

### Ausgangsmaterial

Es wurden Rohphosphatide mit folgender Zusammensetzung eingesetzt:

|  |  | Soja | | Raps | | Sonnenblume | |
|---|---|---|---|---|---|---|---|
| Phosphatidylcholin | (PC) | 16 | % | 18 | % | 22 | % |
| Phosphatidylethanolamin | (PE) | 17 | % | 13 | % | 13 | % |
| Lysophosphatidylcholin | (LPC) | 2,5 | % | 2,6 | % | 1,0 | % |
| Phosphatidylinosit | (PI) | 9 | % | 12 | % | 13 | % |
| N-Acyl-Phosphatidyl-ethanolamin | (N-Acyl-PE) | 2 | % | 1 | % | 1 | % |
| Phosphatidsäure | (PA) | 8 | % | 7 | % | 5 | % |
| Öl | | 35 | % | 36 | % | 30 | % |

Rest: sonstige Lipide

### Beispiel 1

450 ml einer Lösung aus 110 g Sojarohphosphatid (mit 16% PC und 2,5% LPC) im angegebenen Lösungsmittelgemisch werden auf eine mit Kieselgel (200 g) gefüllte Chromatographiesäule gegeben und bei Raumtemperatur mit dem gleichen Lösungsmittelgemisch eluiert. Das Gesamteluat wird in drei Fraktionen unterteilt: Die Fraktionen werden eingedampft und die Rückstände analysiert.

1. Fraktion 0—1,6 l Rückstand: 89,5 g Enthält Neutrallipide, Glykolipide und Phospholipide wie PE, N-Acyl-PE, PA, PI und Spuren PC

2. Fraktion 1,8—4,4 l Rückstand: 18 g (reines Phosphatidylcholin)
PC-Gehalt: 86%
Öl-Gehalt: 0,5%
Die dünnschichtchromatographische Untersuchung weist neben PC nur noch Glykolipide als Verunreinigung aus. PC-Wirkungsgrad: 88% d.Th. bez. auf Sojarohphosphatid.

3. Fraktion 4,4 l — 5,0 l Rückstand: 2 g Enthält PC, LPC und Spuren Glykolipide
Es verbleibt eine geringe PC-Restbeladung auf Kieselgel.

18 g der Fraktion 2 mit 86% Phosphatidylcholin werden eine Stunde bei Raumtemperatur mit 200 ml 95%igem Ethanol verrührt. Die unlöslichen Glykolipide werden über 1 g Aluminiumoxid als Filterhilfsmittel filtriert. Das Filtrat wird eingedampft und der Rückstand analysiert.

Rückstand: 15,8 g (hochreines Phosphatidylcholin)
PC-Gehalt: 96%
Wasser: 1,6%
Öl: 0,5%
Ethanol: 0.8%
PC-Wirkungsgrad: 86% d.Th. bez. auf Sojarohphosphatid
Reinheit (DC): Es wurden keine weiteren Verunreinigungen nachgewiesen.

### Beispiel 2

Es wurde ein Versuch entsprechend Beispiel 1 mit einer Säulentemperatur von 50°C durchgeführt. Es wurden die gleichen Fraktionsschnitte bei unverändertem Gesamteluatvolumen vorgenommen. Die zweite

4

Fraktion enthielt 16,5 g Feststoff mit 87% PC (reines Phosphatidylcholin). Die dünnschichtchromatographische Reinheit entsprach dem Produkt aus Beispiel 1.

Beispiel 3

(Vergleichsbeispiel, Verfahren gemäß der DE—OS 3.047.048)

344 g Sojarohphosphatid (mit 16,5% PC und 2,5% LPC) werden mit 1032 ml 96%igem Ethanol 5 Minuten bei 75°C verrührt. Das Sediment wird bei Raumtemperatur abgetrennt und die überstehende Äthanolphase eingedampft.

Rückstand: 110 g
PC-Gehalt: 30%
PC-Wirkungsgrad: 60% d.Th. bez. auf Sojarohphosphatid

110 g Rückstand werden in 350 ml 96%igem Ethanol gelöst und entsprechend DE—OS 3.047.048 (Bsp. 1) mittels Säulenchromatographie über Kieselgel bei 70°C unter Verwendung von 96%igem Ethanol als Elutionsmittel aufgetrennt. Der Hauptlauf wurde eingedampft und der Rückstand analysiert.

Rückstand: 27,7 g
PC-Gehalt: 87%
LPC-Gehalt: 5%
PC-Wirkungsgrad: 73%

30 g des Rückstands aus dem Hauptlauf mit dem Phosphatidylcholin mit 87% PC und 5% LPC werden in 150 ml eines Gemischs aus 1 Vol.-Teil Leichtbenzin (65—73°C), 1 Vol.-Teil Propanol-2 und 0,175 Vol.-Teilen Wasser gelöst, auf eine mit Kieselgel (200 g) gefüllte Chromatographiesäule gegeben und bei Raumtemperatur mit dem gleichen Lösungsmittelgemisch eluiert. Nach 400 ml Vorlauf werden 3,5 l Hauptlauf aufgefangen.

Der Hauptlauf wird eingedampft und der Rückstand analysiert.

Rückstand: 22 g
PC-Gehalt: 95%
Öl-Gehalt: ≤ 0,5%
LPC-Gehalt: ≤ 0,2% (Nachweisgrenze)
PC-Wirkungsgrad: 80% d.Th. bezogen auf das Einsatzmaterial
Wasser: 1,5%.

Beispiel 4

500 ml einer Lösung aus 125 g Sonnenblumenrohphosphatid mit 22% PC und 1,0% LPC im angegebenen Lösungsmittelgemisch werden auf eine mit Kieselgel (200 g) gefüllte Chromatographiesäule gegeben und bei Raumtemperatur mit dem gleichen Lösungsmittelgemisch eluiert. Das Gesamteluat wird in zwei Fraktionen unterteilt. Die Fraktionen werden eingedampft und die Rückstände analysiert.

1. Fraktion 0—1,0 l Rückstand: 97 g Enthält Neutrallipide, Glykolipide und Phospholipide wie PE, N-Acyl-PE, PA, PI und Spuren PC.

2. Fraktion 1,0—4,0 l Rückstand: 26 g
PC-Gehalt: 87%
Öl-Gehalt: 0,7%

Die dünnschichtchromatographische Untersuchung weist neben PC nur noch Glykolipide als Verunreinigung aus. PC-Wirkungsgrad: 83% d.Th. bez. auf Sonnenblumenrohphosphatid.

Es verbleibt eine geringe PC-Restbeladung auf Kieselgel.

26 g der 2. Fraktion mit 87% Phosphatidylcholin werden eine Stunde bei Raumtemperatur mit 200 ml 95%igem Ethanol verrührt. Die unlöslichen Glykolipide werden über 1 g Aluminiumoxid als Filterhilfsmittel filtriert. Das Filtrat wird eingedampft und der Rückstand analysiert.

Rückstand: 23,2 g (hochreines Phosphatidylcholin)
PC-Gehalt: 97%
Öl-Gehalt: 0,7%
Trockenverlust: 1,5%
PC-Wirkungsgrad: 82% d.Th. bez. auf Sonnenblumenrohphosphatid
Reinheit (DC): Es wurden keine weiteren Verunreinigungen nachgewiesen.

Beispiel 5

500 ml einer Lösung aus 160 g Rapsrohphosphatid (18% PC, 2,6% LPC) im angegebenen Lösungsmittelgemisch wurden gemäß Beispiel 4 behandelt.

Rückstand: 20,7 g (hochreines Phosphatidylcholin)
PC-Gehalt: 96%
Öl-Gehalt: 1,3%
Trockenverlust: 2,0%
PC-Wirkungsgrad: 69% d.Th. bez. auf Rapsrohphosphatid
Reinheit (DC): Es wurden keine weiteren Verunreinigungen nachgewiesen.

## EP 0 187 931 B1

**Patentansprüche**

1. Verfahren zur Isolierung von Phosphatidylcholin aus pflanzlichen Lipidgemischen, dadurch gekennzeichnet, daß man das Lipidgemisch mit einem Lösungsmittelgemisch aus 1 Vol.-Teil einer Petrolätherfraktion (65—73°C), 1 Vol.-Teil Propanol-2 und 0,175 Vol.-Teilen Wasser löst, die Lösung bei einer Temperatur im Bereich von 20—50°C auf eine mit Kieselgel gefüllte Säule gibt, bei dieser Temperatur mit dem gleichen Lösungsmittelgemisch eluiert und dabei im Hauptlauf ein Begleitphosphatid-freies Phosphatidylcholin erhält.

2. Verfahren gemäß Anspruch 1, dadurch gekennzeichnet, daß das Lipidgemisch sich aus polaren und unpolaren pflanzlichen Lipiden, wie sie in Rohphosphatiden (Roh-Lecithinen) vorkommen, zusammensetzen kann.

3. Verfahren gemäß Anspruch 2, dadurch gekennzeichnet, daß das Lipidgemisch aus Phosphatidylcholin-haltigen Phospholipiden besteht.

**Revendications**

1. Procédé pour isoler de la phosphatidylcholine provenant de mélanges lipides végétaux, se caractérisant par le fait que le mélange de lipides est dissous avec un mélange de solvants composé de 1 particle en volume d'une fraction d'éther de pétrole (65 à 73), 1 partie en volume de propanol-2 et 0,175 partie en volume d'eau, que cette solution à une température dans la plage de 20 à 50°C est versée sur une colonne remplie de gel de silice, qu'une élution a lieu à cette température avec le même mélange de solvants et que de la phosphatidylcholine dépourvue de phosphatide secondaire est obtenue lors du passage principal.

2. Procédé selon la revendication 1, se caractérisant par le fait que le mélange de lipides peut se composer de lipides végétaux polaires et non polaires tels que rencontrés dans les phosphatides brutes (lécithines brutes).

3. Procédé selon la revendication 2, se caractérisant par le fait que le mélange de lipides se compose de phospholipides contenant de la phosphatidylcholines.

**Claims**

1. Methods for the isolation of phosphatidylcholine from mixtures of vegetable lipids whereby the lipid mixture is dissolved in a solvent mixture consisting of 1 part by volume petroleum ether fraction (65—73°C), 1 part by volume 2-propanol and 0.175 parts by volume water and the resulting solution is applied to a column filled with silica gel at a temperature of 20—50°C and eluted with the same solvent mixture at this temperature and the main fraction consists of phosphatidylcholine freed from accompanying phosphatides.

2. Methods according to claim 1 whereby the lipid mixture can consist of polar and nonpolar vegetable lipids such as occur in crude phosphatides (crude lecithins).

3. Methods according to claim 2 whereby the lipid mixture consists of phospholipids containing phosphatidylcholine.